# EUROPÄISCHE PATENTSCHRIFT

(11) **EP 2 534 401 B1**
(45) Veröffentlichungstag und Bekanntmachung des Hinweises auf die Patenterteilung: **01.01.2014**
(21) Anmeldenummer: 11703570.9
(22) Anmeldetag: 14.01.2011
(51) Int. Cl.: F16L 33/00

(54) **ANSCHLUSSVORRICHTUNG FÜR EIN KUNSTSTOFFROHR**
CONNECTION DEVICE FOR A PLASTIC PIPE
DISPOSITIF DE RACCORDEMENT POUR UN TUYAU EN MATIÈRE PLASTIQUE

(30) Priorität: 10.02.2010 AT 1812010
(43) Veröffentlichungstag der Anmeldung: 19.12.2012
(73) Patentinhaber: KE-KELIT Kunststoffwerk Gesellschaft m.b.H., 4020 Linz (AT)
(72) Erfinder: RATSCHMANN, Elmar, A-4201 Hellmonsödt (AT)
(74) Vertreter: Hübscher, Helmut
(86) Internationale Anmeldenummer: PCT/AT2011/000020
(87) Internationale Veröffentlichungsnummer: WO 2011/097659

(56) Entgegenhaltungen:
- AT-A4- 504 370
- US-A- 4 005 884
- US-A- 4 068 866

## Beschreibung

### Technisches Gebiet

Die Erfindung bezieht sich auf eine Anschlussvorrichtung für ein Kunststoffrohr mit einem das Kunststoffrohr aufnehmenden Anschlussnippel, der einen sich gegen das freie Nippelende hin erweiternden Außenkonus bildet, zwischen dem und einem axialen Anschlag ein auf den Außenkonus aufschiebbarer Spreizring mit nach außen abstehenden Rückhaltekrallen vorgesehen ist, der über einen Stützring am axialen Anschlag des Anschlussnippels abgestützt ist, und mit einer an einem Anschlagflansch des Anschlussnippels zugfest angreifenden, das auf den Anschlussnippel aufgeschobene Kunststoffrohr umschließenden Hülse.

### Stand der Technik

Bei einer bekannten Anschlussvorrichtung dieser Art (AT 410 706 B) wird das Kunststoffrohr auf einen Anschlussnippel aufgeschoben, der im Bereich eines Außenkonus einen Spreizring mit nach außen abstehenden Rückhaltekrallen trägt, sodass beim Aufschieben das Kunststoffrohr über den sich im verjüngten Bereich des Außenkonus befindlichen Spreizring hinweggleitet. Beim Versuch, dass Kunststoffrohr von Anschlussmittel abzuziehen, wird der Spreizring über seine abstehenden Rückhaltekrallen mitgenommen und auf den Außenkonus aufgeschoben. Die damit verbundene Spreizung des Spreizringes bedingt ein Festhalten des Kunststoffrohres, das von einer zugfest mit einem Anschlagflansch des Anschlussnippels verbundenen Hülse umschlossen wird, sodass das Kunststoffrohr dem gespreizten Spreizring nicht ausweichen kann und zwischen dem Spreizring und der als Widerlager wirkenden Hülse festgehalten wird. Um Dehnungen des Kunststoffrohres ausgleichen zu können, wird bevorzugt ein freier Verschiebeweg für den Spreizring vorgesehen. Da zum einfachen Aufschieben des Kunststoffrohres auf den Anschlussnippel der Spreizring mit seinen Rückhaltekrallen möglichst innerhalb des Außenumfanges des Anschlussnippels liegen soll, besteht die Gefahr, dass beim Abziehen des Kunststoffrohres vom Anschlussnippel der Spreizring nicht mitgenommen und folglich auch nicht auf den Außenkonus des Anschlussnippels aufgeschoben wird. Das Kunststoffrohr kann somit in einem solchen Fall nicht zwischen Spreizring und Hülse festgehalten werden.

Um dies zu vermeiden wurde es bereits vorgeschlagen (AT 504 370 A1) den Spreizring über einen gummielastischen Stützring am axialen Anschlag des Anschlussnippels abzustützen. Diese Konstruktion weist allerdings hinsichtlich ihrer Funktionalität einige Nachteile auf. So ist nicht nur die Montage aufwendig, sondern besteht auch die Gefahr, dass der gummielastische Stützring beim Aufschieben des Kunststoffrohres auf den Anschlussnippel aus seiner Aufnahmenut in den Spalt zwischen Anschlussnippel und Hülse gezwängt und entlang des Anschlussnippels verschoben wird, was die Federfunktion des Stützringes beeinträchtigt, womit keine definierte Anpresskraft für die gegen das Rohrinnere angestellten Rückhaltekrallen mehr gewährleistet ist.

### Darstellung der Erfindung

Der Erfindung liegt somit die Aufgabe zugrunde, eine Anschlussvorrichtung der eingangs geschilderten Art so auszugestalten, dass mit einfachen konstruktiven Mitteln ein sicheres Festhalten des Kunststoffrohres zwischen dem Spreizring und der Hülse mit einer gesicherten Anpresskraft für die Rückhaltekrallen gewährleistet werden kann, ohne auf aufschieben des Kunststoffrohres auf den Anschlussnippel mit vergleichsweise kleiner Kraft verzichten zu müssen. Zudem sollen die Montageverhältnisse vereinfacht werden.

Die Erfindung löst die gestellte Aufgabe dadurch, dass zwischen Spreizring und Stützring ein gummielastischer Federring angeordnet ist, wobei Spreizring, Stützring und Federring schubfest untereinander verbunden sind.

Durch die in axiale Richtung federnde Abstützung des Spreizringes am Anschlag des Anschlussnippels kann der Spreizring beim Aufschieben des Kunststoffrohres auf den Anschlussnippel durch das Kunststoffrohr gegen die Federkraft der Abstützung zumindest soweit vom Außenkonus abgeschoben werden, dass der Spreizring im Wesentlichen innerhalb des Nippelumfanges zu liegen kommt und daher keinen erhöhten Schiebewiderstand für das Kunststoffrohr darstellt. Der Spreizring stützt sich dabei über den gummielastischen Federring und den am Anschlag des Anschlussnippels anliegenden Stützring ab, wobei Spreizring, Federring und Stützring einen schubfesten Verbundkörper bilden, der gemeinsam auf den Außenkonus aufgesetzt werden bzw. von diesem abgenommen werden kann. Da die gegenüber dem Federring aus einem steifen, nicht gummielastischen, Material, wie beispielsweise einem harten Kunststoff, einem Metall od. wirkungsgleichem, gefertigten Spreiz- und Stützringe den gummielastischen Federring zwischen sich schubfest aufnehmen, wird auch ein Verlagern des Federringes aus seiner Aufnahmenut in den Spalt zwischen Anschlussnippel und Hülse beim Aufschieben des Kunststoffrohres auf den Anschlussnippel sicher verhindert, womit somit stets eine definierte Anpresskraft der Rückhaltekrallen gegen das Rohrinnere gewährleistet ist. Beim Versuch, das Kunststoffrohr vom Anschlussnippel abzuziehen, unterstützt die in axialer Richtung wirksame Federring das Aufschieben des Spreizringes auf den Außenkonus, womit die entsprechend vorstehenden Rückhaltekrallen eine sichere Mitnahme des Spreizringes mit dem Kunststoffrohr erzwingen, und zwar mit der Folge, dass die auf das Kunststoffrohr wirksamen Klemmkräfte zwischen dem Spreizring und der Hülse mit zunehmendem Abzug größer werden. Die Konstruktion und Montage ist dabei wenig aufwendig, da lediglich ein Bauteil in die den Außenkonus und den Anschlag ausbildende Aufnahmenut einzusetzen ist.

Sind der Stützring und der Federring ebenso wie der Spreizring geschlitzt ausgebildet, kann eine besonders einfache Montage der Baueinheit gewährleistet. Mit schubfesten Verbund können Fehlmontagen zudem praktisch ausgeschlossen werden. Weist der gummielastische Federring zudem in Achsrichtung eine sich verändernde Dicke auf, so kann durch entsprechende Anpassung und Auswahl dieser Geometrie positiv Einfluss auf die Verformungsneigung des Federringes beim Aufschieben des Kunststoffrohres auf den Spreizring genommen werden, um die Klemmungsneigung des Federringes zwischen Anschlussnippel und Rohr noch weiter zu verringern.

Zur Feinabstimmung, bzw. um übermäßige Auswölbungen des Federringes beim Aufschieben des Kunststoffrohres vermeiden zu können, besteht zudem die Möglichkeit zwischen Spreizring und Stützring zwei oder mehrere gummielastische Federringe alternierend anzuordnen, zwischen denen gegebenenfalls je ein weiterer Stützring angeordnet sein, womit sich eine alternierende Anordnung von Federringen und Stützringen ergibt.

Um ein radiales Ausweichen von Spreizring, Federring und Stützring beim Aufschieben des Kunststoffrohrs auf den Anschlussnippel zu vermeiden, wird empfohlen, dass der Stützring mit seiner dem Anschlagflansch zugewandten Stirnfläche in eine dem Anschlagflansch zugeordnete hinterschnittene Nut eingreift. Die dem Anschlagflansch zugewandten Stirnfläche des Stützrings weist dabei vorzugsweise eine der Nutform angepasste Geometrie auf.

### Kurze Beschreibung der Zeichnung

In der Zeichnung ist der Erfindungsgegenstand beispielsweise dargestellt. Es zeigen:
- Fig. 1: eine erfindungsgemäße Anschlussvorrichtung für ein Kunststoffrohr in einem vereinfachten Axialschnitt,
- Fig. 2: einen, den Spreizring darstellenden, Ausschnitt aus Fig. 1 in vergrößertem Maßstab und
- Fig. 3: eine Vorrichtung aus Fig. 2 mit einer Konstruktionsvariante eines erfindungsgemäßen Spreizringes,
- Fig. 4: einen erfindungsgemäßen Spreizring in Schrägansicht und
- Fig. 5: eine Konstruktionsvarianter der Vorrichtung aus Fig. 1 im vereinfachten Axialschnitt.

### Weg zur Ausführung der Erfindung

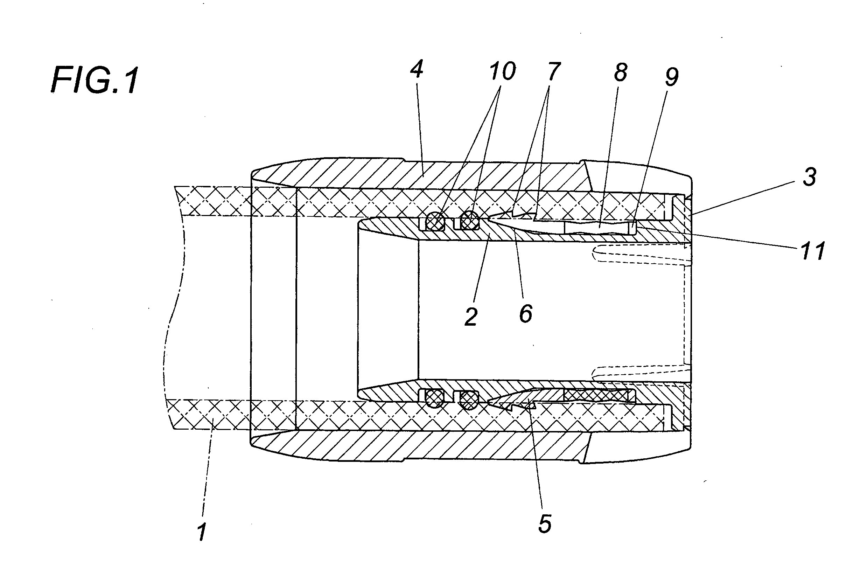

Die Anschlussvorrichtung für ein strichpunktiert angedeutetes Kunststoffrohr 1 weist gemäß der Fig. 1 einen das Kunststoffrohr 1 aufnehmenden Anschlussnippel 2 mit einem Anschlagflansch 3 auf, an dem eine das Kunststoffrohr 1 umschließende Hülse 4 zugfest angreift.

Um das Kunststoffrohr 1 zwischen dem Anschlussnippel 2 und der Hülse 4 festzuklemmen, ist auf dem Anschlussnippel 2 ein Spreizring 5 gelagert, der mit einem Außenkonus 6 des Anschlussnippels 2 zusammenwirkt. Die Anordnung ist dabei so getroffen, dass sich der Spreizring 5, der auf der dem Kunststoffrohr 1 zugewandten Außenseite radial vorspringende Rückhaltekrallen 7 bildet, über einen gummielastischen Federring 8 und einen Stützring 9 an einem Anschlag 11 des Anschlussnippels 2 federnd abstützt. Spreizring 5, Federring 8 und Stützring 9 bilden eine Baueinheit aus schubfest zusammengesetzten Einzelteilen.

Wird das Kunststoffrohr 1 auf den Anschlussnippel 2 aufgeschoben, so kann der Spreizring 5 gegen die Federkraft des gummielastischen Federringes 8 auf dem Außenkonus 6 soweit verschoben werden, dass der Spreizring 5 im wesentlichen innerhalb des Umfanges des Anschlussnippels 2 zu liegen kommt, sodass das Kunststoffrohr 1 ohne besondere Kraftanwendung über den Spreizring 5 hinweg bis zum Anschlagen an den Anschlagflansch 3 vorgeschoben werden kann. Beim Versuch, das Kunststoffrohr 1 aus dieser Befestigungsstellung vom Anschlussnippel 2 abzuziehen, wird der Spreizring 5 unterstützt vom gummielastischen Federring 8 auf den Außenkonus 8 aufgeschoben und gespreizt, wobei sich die Rückhaltekrallen 9 zunehmend in die Innenwandung des Kunststoffrohres 1 einprägen und dadurch ein Formschluss herstellen, der ein weiteres Abziehen des Kunststoffrohres 1 vom Anschlussnippel 2 nur unter einer Mitnahme des Spreizringes 5 erlaubt. Dies bedeutet, dass das Kunststoffrohr 1 zunehmend zwischen der Hülse 4 und dem Spreizring 5 geklemmt und gegen ein weiteres Abziehen festgehalten wird. Die Abdichtung zwischen dem Kunststoffrohr 1 und dem Anschlussnippel 2 wird in herkömmlicher Weise über Dichtungsringe 10 erreicht, die in Aufnahmenuten des Anschlussnippels 2 eingesetzt sind.

Dadurch, dass der Stützring 9 und der Federring 8 ebenso wie der Spreizring 5 einen axialen Spreizschlitz B aufweisen, ist eine besonders einfache Montage der Baueinheit gewährleistet. Der schubfeste Verbund hat zudem zur Folge, dass Fehlmontagen praktisch auszuschließen sind. Weist der gummielastische Federring 8 zudem in Achsrichtung eine sich verändernde Dicke auf, beispielsweise im dargestellten Ausführungsbeispiel Einschnürungen zwischen Dickenmaxima, so kann durch entsprechende Anpassung und Auswahl dieser Geometrie positiv Einfluss auf die Verformungsneigung des Federringes beim Aufschieben des Kunststoffrohres 1 auf den Spreizring 5 genommen werden.

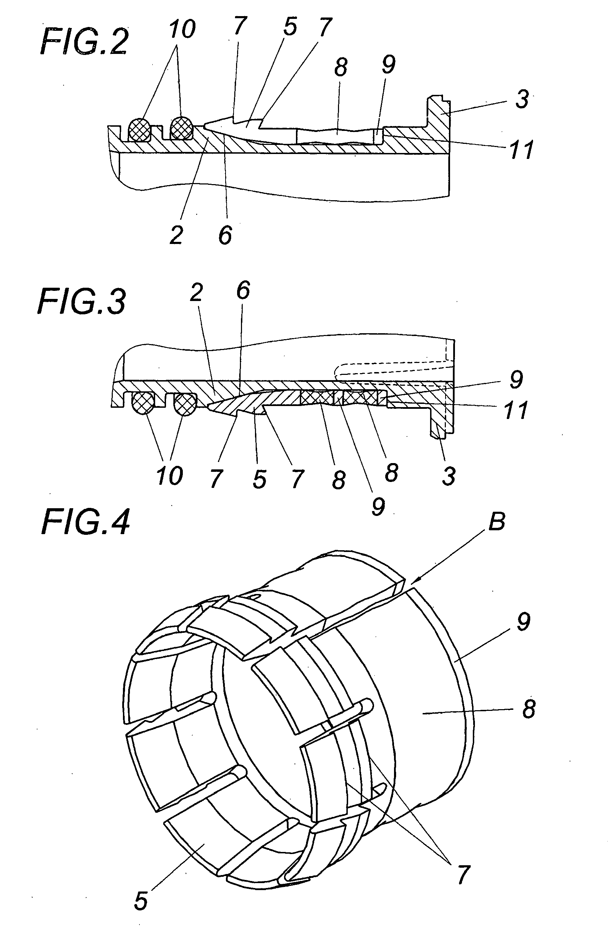

Zur Feinabstimmung, bzw. um übermäßige Auswölbungen des Federringes beim Aufschieben des Kunststoffrohres 1 zu vermeiden können zwischen Spreizring 5 und Stützring 9 zwei oder mehrere gummielastische Federringe 8 angeordnet sein, zwischen denen vorzugsweise je ein weiterer Stützring 9 angeordnet ist, womit dem Spreizring 5 alternierend Federringe 8 und Stützringe 9 nachgeordnet sind (Fig. 3).

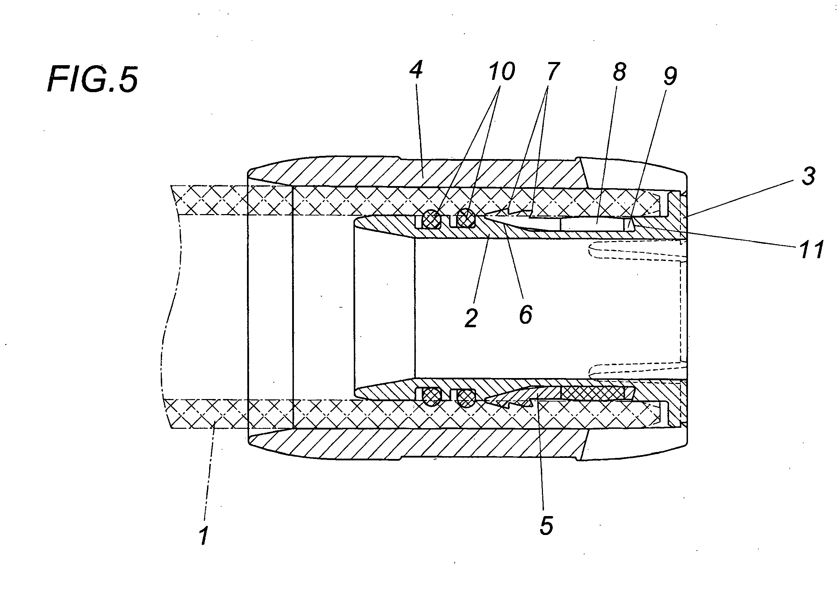

Um ein radiales Ausweichen von Spreizring 5, Federring 8 und Stützring 9 beim Aufschieben des Kunststoffrohrs 1 auf den Anschlussnippel 2 zu vermeiden, wird empfohlen, dass der Stützring 9 mit seiner dem Anschlagflansch 3 zugewandten Stirnfläche in eine dem Anschlagflansch 3 zugeordnete hinterschnittene Nut 11 eingreift. Die dem Anschlagflansch 3 zugewandten Stirnfläche des Stützrings 9 weist im dargestellten Ausführungsbeispiel nach Fig. 5 eine der Nutform angepasste Geometrie auf, bildet also ein passendes Gegenstück aus. Der Stützring 9 wird beim Aufschieben des Kunststoffrohrs 1 auf den Anschlussnippel 2 in die hinterschnittene Nut 11 mit seinem endseitigen Ansatz eingeschoben und gegen ein radiales Ausbrechen gesichert.

## Patentansprüche

1. Anschlussvorrichtung für ein Kunststoffrohr (1) mit einem das Kunststoffrohr (1) aufnehmenden Anschlussnippel (2), der einen sich gegen das freie Nippelende hin erweiternden Außenkonus (6) bildet, zwischen dem und einem axialen Anschlag (11) ein auf den Außenkonus (6) aufschiebbarer Spreizring (5) mit nach außen abstehenden Rückhaltekrallen (7) vorgesehen ist, der über einen Stützring (9) am axialen Anschlag (11) des Anschlussnippels (2) abgestützt ist, und mit einer an einem Anschlagflansch (3) des Anschlussnippels (2) zugfest angreifenden, das auf den Anschlussnippel (2) aufgeschobene Kunststoffrohr (1) umschließenden Hülse (4), **dadurch gekennzeichnet, dass** zwischen Spreizring (5) und Stützring (9) ein gummielastischer Federring (8) angeordnet ist, wobei Spreizring (5), Stützring (9) und Federring (8) schubfest untereinander verbunden sind.

2. Anschlussvorrichtung nach Anspruch 1, **dadurch gekennzeichnet, dass** der Stützring (9) und gegebenenfalls auch der Federring (8) ebenso wie der Spreizring (5) einen axialen Spreizschlitz (B) aufweisen.

3. Anschlussvorrichtung nach Anspruch 1 oder 2, **dadurch gekennzeichnet, dass** der gummielastische Federring (8) in Achsrichtung mit variierender Dicke, beispielsweise Einschnürungen zwischen Dickenmaxima, bzw. wellrohrförmig ausgestattet ist.

4. Anschlussvorrichtung nach einem der Ansprüche 1 bis 3, **dadurch gekennzeichnet, dass** zwischen Spreizring (5) und Stützring (9) zwei oder mehrere gummielastische Federringe (8) angeordnet sind, zwischen denen vorzugsweise je ein weiterer Stützring angeordnet ist.

5. Anschlussvorrichtung nach einem der Ansprüche 1 bis 4, **dadurch gekennzeichnet, dass** der Stützring (9) mit seiner dem Anschlagflansch (3) zugewandten Stirnfläche in eine dem Anschlagflansch (3) zugeordnete hinterschnittene Nut (11) eingreift.

6. Anschlussvorrichtung nach Anspruch 5, **dadurch gekennzeichnet, dass** die dem Anschlagflansch (3) zugewandten Stirnfläche des Stützrings (9) eine der Nutform angepasste Geometrie aufweist.

## Claims

1. Connection device for a synthetic material tube (1) having a connection nipple (2) receiving the synthetic material tube (1) and forming an outer cone (6) which widens towards the free nipple end, a spreader ring (5) which can be slid onto the outer cone (6) and has outwardly protruding retaining claws (7) being provided between the outer cone and an axial stop (11) and being supported via a support ring (9) on the axial stop (11) of the connection nipple (2), and having a sleeve (4) which engages on a stop flange (3) of the connection nipple (2) in a tension-resistant manner and surrounds the synthetic material tube (1) slid onto the connection nipple (2), **characterised in that** arranged between the spreader ring (5) and support ring (9) is a rubber-elastic spring ring (8), wherein the spreader ring (5), support ring (9) and spring ring (8) are connected together in a shear-resistant manner.

2. Connection device as claimed in claim 1, **characterised in that** the support ring (9) and optionally also the spring ring (8) comprise an axial spreader slot (B) like the spreader ring (5).

3. Connection device as claimed in claim 1 or 2, **characterised in that** the rubber-elastic spring ring (8) has a varying thickness in the axial direction, e.g., restrictions between areas of maximum thickness, or is in the form of a corrugated tube.

4. Connection device as claimed in any one of claims 1 to 3, **characterised in that** arranged between the spreader ring (5) and support ring (9) are two or more rubber-elastic spring rings (8), between which preferably a further support ring is arranged in each case.

5. Connection device as claimed in any one of claims 1 to 4, **characterised in that** the support ring (9) engages with its end face - facing the stop flange (3) - into an undercut groove (11) allocated to the stop flange (3).

6. Connection device as claimed in claim 5, **characterised in that** the end face - facing the stop flange (3) - of the support ring (9) has a geometry adapted to the shape of the groove.

## Revendications

1. Dispositif de raccordement pour un tuyau en matière plastique (1) avec un élément de raccord (2) recevant le tuyau en matière plastique (1) qui forme un cône extérieur (6) s'évasant en direction de l'extrémité libre de l'élément, entre lequel et une butée axiale (11), il est prévu une bague d'écartement (5) qui peut coulisser sur le cône extérieur (6), avec des ergots de retenue (7) dépassant vers l'extérieur, qui prend appui par l'intermédiaire d'une bague d'appui (9) sur la butée axiale (11) de l'élément de raccord (2) et avec une douille (4) venant en prise, de façon à résister à la traction, au niveau d'une bride de butée (3) de l'élément de raccord (2) et entourant le tuyau en matière plastique (1) enfilé sur l'élément de raccord (2), **caractérisé en ce qu'**une bague élastique (8) à élasticité caoutchoutique est disposée entre la bague d'écartement (5) et la bague d'appui (9), la bague d'écartement (5), la bague d'appui (9) et la bague élastique (8) étant reliées entre elles de façon à résister au cisaillement.

2. Dispositif de raccordement selon la revendication 1, **caractérisé en ce que** la bague d'appui (9), et le cas échéant aussi, la bague élastique (8), présentent tout comme la bague d'écartement (5) une fente d'écartement (B) axiale.

3. Dispositif de raccordement selon la revendication 1 ou 2, **caractérisé en ce que** la bague élastique (8) à élasticité caoutchoutique est dotée, en direction de l'axe, d'épaisseur variable, par exemple, de strictions entre les maxima d'épaisseur, ou plus précisément, sous forme de tube ondulé.

4. Dispositif de raccordement selon l'une des revendications 1 à 3, **caractérisé en ce qu'**entre la bague d'écartement (5) et la bague d'appui (9) sont disposées deux ou plusieurs bagues élastiques (8) à élasticité caoutchoutique entre lesquelles une autre bague d'appui est de préférence disposée.

5. Dispositif de raccordement selon l'une des revendications 1 à 4, **caractérisé en ce que** la bague d'appui (9) est en prise par sa face frontale orientée vers la bride de butée (3) dans une rainure (11) à contre-dépouille associée à la bride de butée (3).

6. Dispositif de raccordement selon la revendication 5, **caractérisé en ce que** la face frontale, orientée vers la bride de butée (3), de la bague d'appui (9) présente une géométrie adaptée à la forme de la rainure.
